(19) Europäisches Patentamt
European Patent Office
Office européen des brevets

(11) EP 4 715 930 A1

(12) EUROPEAN PATENT APPLICATION

(43) Date of publication:
**25.03.2026 Bulletin 2026/13**

(21) Application number: **25201886.6**

(22) Date of filing: **12.09.2025**

(51) International Patent Classification (IPC):
***H01M 10/0564*** (2010.01) ***H01M 10/0566*** (2010.01)
***H01M 50/449*** (2021.01) ***C08G 73/02*** (2006.01)
***H01M 50/411*** (2021.01)

(52) Cooperative Patent Classification (CPC):
**H01M 10/0564; H01M 10/0566; H01M 50/411; H01M 50/449**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.09.2024 KR 20240124443**

(71) Applicant: **SAMSUNG SDI CO., LTD.**
**Yongin-si, Gyeonggi-do 17084 (KR)**

(72) Inventors:
- **CHOI, Kyeong Tak**
**16678 Suwon-si, Gyeonggi-do (KR)**
- **LEE, Tae Jin**
**16678 Suwon-si, Gyeonggi-do (KR)**
- **LEE, Yeon Ji**
**16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) SEPARATOR FOR RECHARGEABLE LITHIUM BATTERY AND RECHARGEABLE LITHIUM BATTERY INCLUDING THE SAME

(57) The present disclosure relates to a separator for a rechargeable lithium battery, and a rechargeable lithium battery including the separator. The separator for a rechargeable lithium battery includes a porous substrate, and a coating layer located on at least one surface of the porous substrate.

EP 4 715 930 A1

## Description

BACKGROUND

### Field of the Disclosure

Examples of the present disclosure relate to a separator for a rechargeable lithium battery, and a rechargeable lithium battery including the separator.

### Discussion of Related Art

With increasing presence of electronic devices that use batteries, such as, e.g., mobile phones, laptop computers, electric vehicles, and the like, the demand for rechargeable batteries with high energy density and high capacity is increasing. Accordingly, improving the performance of rechargeable lithium batteries may be advantageous.

A rechargeable lithium battery typically includes a positive electrode and a negative electrode, the positive electrode and the negative electrode including active materials that enable intercalation and deintercalation of lithium ions, and an electrolyte. The rechargeable lithium battery produces electrical energy through oxidation and reduction when lithium ions are intercalated/deintercalated into/from the positive and negative electrodes.

As the charging and discharging of a rechargeable lithium battery continues, a chain of reactions [structural collapse of a positive electrode active material located on a positive electrode surface → elution of transition metal ions, post-transition metal ions, and/or metalloid ions from the positive electrode active material into an electrolyte → reduction of the ions eluted into the electrolyte on the negative electrode surface → electrodeposition of the ions reduced on the negative electrode surface in the form of a transition metal, a metalloid, and/or an oxide thereof] may occur. Accordingly, an unstable solid-electrolyte interphase (SEI) film may form on the negative electrode surface, side reactions (e.g., gas generation, increased interfacial resistance, and the like) occur at the interface between the negative electrode and the electrolyte, and the lifespan and/or high-temperature storage characteristics of the rechargeable lithium battery may be reduced.

Further, when a rechargeable lithium battery is charged at high voltage or stored at high temperatures (e.g., 60 °C or more), the elution amount of transition metal ions, post-transition metal ions, and/or metalloid ions from a positive electrode active material increases.

A separator is included between the positive electrode and the negative electrode, and impregnated in the electrolyte. Accordingly, the separator may capture the transition metal ions, post-transition metal ions, and/or metalloid ions eluted into the electrolyte, thereby improving a resistance increase rate during high voltage charging or high temperature storage.

## SUMMARY

The invention is defined by the appended claims. The description that follows is subjected to this limitation. Any disclosure lying outside the scope of said claims is only intended for illustrative as well as comparative purposes.

One aspect of the present disclosure includes a separator for a rechargeable lithium battery.

The separator for a rechargeable lithium battery includes a porous substrate; and a coating layer located on at least one surface of the porous substrate, wherein the coating layer includes a compound represented by Chemical Formula 1 below:

Chemical Formula 1:

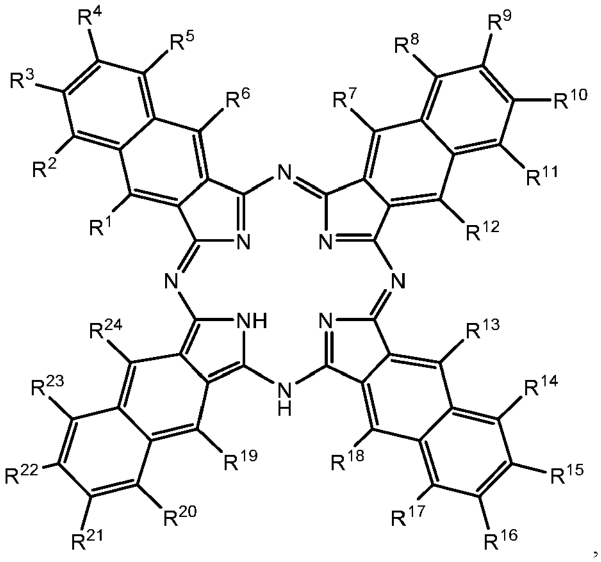

wherein $R^1$ to $R^{24}$ is described in the detailed description.

Another aspect of the present disclosure includes a rechargeable lithium battery.

The rechargeable lithium battery includes a positive electrode, a negative electrode, and the separator for a rechargeable lithium battery located between the positive electrode and the negative electrode.

The separator for a rechargeable lithium battery according to one aspect may capture transition metal ions, post-transition metal ions, and/or metalloid ions, which are eluted into an electrolyte, thereby improving a resistance increase rate when a rechargeable lithium battery is charged at high voltage or stored at high temperatures.

BRIEF DESCRIPTION OF THE DRAWINGS

The above and other objects, features and advantages of the present disclosure become more apparent to those of ordinary skill in the art by describing example embodiments thereof in detail with reference to the accompanying drawings, in which:

FIG. 1 to FIG. 4 are cross-sectional views which schematically illustrate rechargeable lithium batteries according to one example embodiment; and

FIG. 5 shows resistance increase rates when batteries using separators according to Example 1 and Comparative Example 1 are stored at 60 °C. In FIG. 5, the X axis represents the number of storage days (units: days), the Y axis represents the resistance (DCIR, or direct current internal resistance) increase rate (units: %), • indicates Example 1, and ▪ indicates Comparative Example 1.

FIG. 6 is a cross-sectional view showing a separator for a rechargeable lithium battery according to one example embodiment.

## DETAILED DESCRIPTION

Hereinafter, example embodiments of the present disclosure are described in detail. However, these embodiments are presented as examples, and the present disclosure is not limited thereby, and the present disclosure is only defined by the scope of the claims described below.

Unless otherwise specified herein, when a part such as a layer, a film, a region, or a plate is described as being "on" another part, this includes not only a case where the part is "directly on" another part, but also a case where still another part is present therebetween.

Unless otherwise specified herein, the singular expression may also include the plural. In addition, unless otherwise specified, "A or B" may mean "including A, including B, or including A and B."

As used herein, "combination thereof" may mean a mixture, a laminate, a composite, a copolymer, an alloy, a blend, a reaction product, and the like of components.

In the specification, the particle diameter (D50) refers to a particle diameter, which means a diameter of particles with a cumulative volume of 50% by volume in a particle size distribution. The particle size distribution may be measured by a method known to those skilled in the art. For example, the particle size distribution may be measured by a particle size analyzer, or a transmission electron micrograph or a scanning electron micrograph. Alternatively, after measuring using a

measuring device using dynamic light scattering, performing data analysis, and counting the number of particles for each particle size range, the D50 value may be obtained therefrom. Alternatively, D50 may be measured by a laser diffraction method. For example, when measured by the laser diffraction method, D50 may be calculated based on 50% of the particle size distribution in a measuring device after particles to be measured are dispersed in a dispersion solvent, introduced to a commercially available laser diffraction particle size measuring device (e.g., MT 3000 available from Microtrac, Ltd.) to irradiate ultrasonic waves of 28 kHz at a power of 60W.

"(Meth)acryl" used in the specification refers to acryl and/or methacryl.

Unless otherwise specified in the specification, "substitution" refers to substitution of at least one hydrogen atom in a compound with a substituent selected from the group consisting of a halogen atom (F, Cl, Br, or I), a hydroxy group, a $C_1$ to $C_{20}$ alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a $C_1$ to $C_{20}$ alkyl group, a $C_2$ to $C_{20}$ alkenyl group, a $C_2$ to $C_{20}$ alkynyl group, a $C_6$ to $C_{30}$ aryl group, a $C_3$ to $C_{20}$ cycloalkyl group, a $C_3$ to $C_{20}$ cycloalkenyl group, a $C_3$ to $C_{20}$ cycloalkynyl group, a $C_2$ to $C_{20}$ heterocycloalkyl group, a $C_2$ to $C_{20}$ heterocycloalkenyl group, and a $C_2$ to $C_{20}$ heterocycloalkynyl group.

Unless otherwise specified in the specification, "heterocycloalkyl group," "heterocycloalkenyl group," "heterocycloalkynyl group," and "heterocycloalkylene group" refers to at least one N, O, S, or P hetero atom present in a cyclic compound such as a cycloalkyl, cycloalkenyl, cycloalkynyl, and cycloalkylene, respectively.

Unless otherwise defined in the chemical formulas in the specification, when a chemical bond is not drawn at a location where a chemical bond should be drawn, it means that a hydrogen atom is bonded at this location.

When describing a numerical range in the specification, 'X to Y' means 'X or more and Y or less (X ≤ and ≤ Y).

A separator for a rechargeable lithium battery includes a porous substrate, and a coating layer located on at least one surface of the porous substrate, and the coating layer includes the compound of Chemical Formula 1 below.

The compound of Chemical Formula 1 may capture transition metal ions, post-transition metal ions, and/or metalloid ions, which can be eluted into an electrolyte, when the rechargeable lithium battery is charged at high voltage or stored at high temperatures (e.g., 60 °C or more). Accordingly, the separator may reduce or suppress side reactions occurring at the interface between a negative electrode and an electrolyte (e.g., gas generation, increased interfacial resistance, and the like), and improve the lifespan and/or high temperature storage characteristics of the rechargeable lithium battery.

According to one example embodiment, the transition metal ions, post-transition metal ions, and/or metalloid ions may be eluted from a positive electrode active material.

Compound of Chemical Formula 1:

The compound of Chemical Formula 1 may capture transition metal ions, post-transition metal ions, and/or metalloid ions present in an electrolyte. **In** other words, the compound of Chemical Formula 1 is naphthalocyanine or a derivative thereof and capable of forming chelate complexes with metal ions eluted under high-temperature conditions into the electrolyte. It has been found, that the presence of these chelate-binding ligands in the coating layer may lower a resistance increase under high-temperature conditions.

For example, the compound of Chemical Formula 1 may capture at least one of silicon (Si) ions, titanium (Ti) ions, vanadium (V) ions, chromium (Cr) ions, manganese (Mn) ions, iron (Fe) ions, cobalt Co) ions, nickel (Ni) ions, copper (Cu) ions, zinc (Zn) ions, scandium (Sc) ions, or a combination thereof, present in an electrolyte.

For example, the compound of Chemical Formula 1 may be remarkably advantageous in capturing at least one of cobalt (Co) ions, nickel (Ni) ions, manganese (Mn) ions, or a combination thereof. In other words, high-temperature resistance increase could be at least lowered in lithium secondary batteries including at least one of Co, Ni, and Mn in the electrode active material, when the compound of Chemical Formula 1 is present in a coating layer of the separator.

Herein, the ions or a combination thereof may be derived from a positive electrode active material and/or present in an electrolyte due to external factors. The ions or a combination thereof may be eluted into the electrolyte when the rechargeable lithium battery is charged at high voltage or stored at high temperatures (e.g., 60 °C or more), but the present disclosure is not necessarily limited thereto.

Therefore, the separator may improve the lifespan and/or high-temperature storage characteristics of the rechargeable lithium battery by reducing the phenomenon of precipitating the ions or a combination thereof on a negative electrode surface. This effect is exhibited regardless of the type of the positive electrode active material, the operating temperature, and the upper limit charge voltage of the rechargeable lithium battery.

Herein, "capture" may be due to the coordinate bond between the compound represented by Chemical Formula 1 and the ions. For example, by the coordinate bond between the compound represented by Chemical Formula 1 and the ions, the compound represented by Chemical Formula 1 may be converted into a complex represented by any one of Chemical Formulas 1-1 to 1-10 below:

Chemical Formula 1-1:

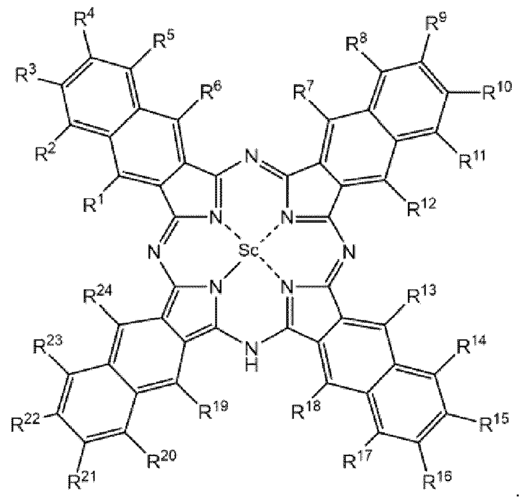

Chemical Formula 1-2:

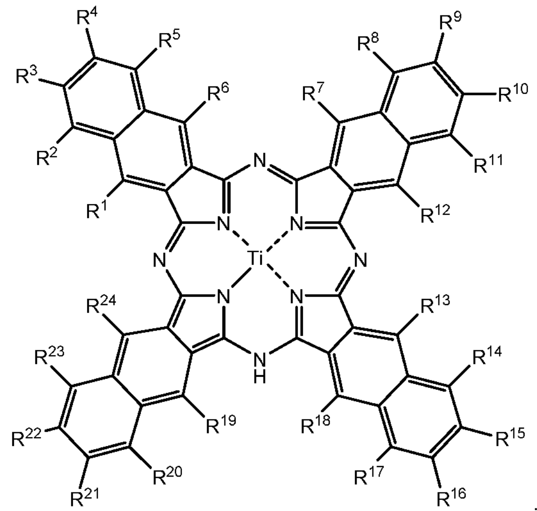

Chemical Formula 1-3:

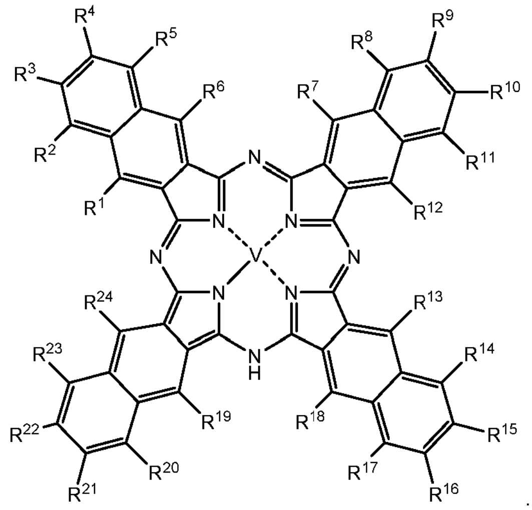

Chemical Formula 1-4:

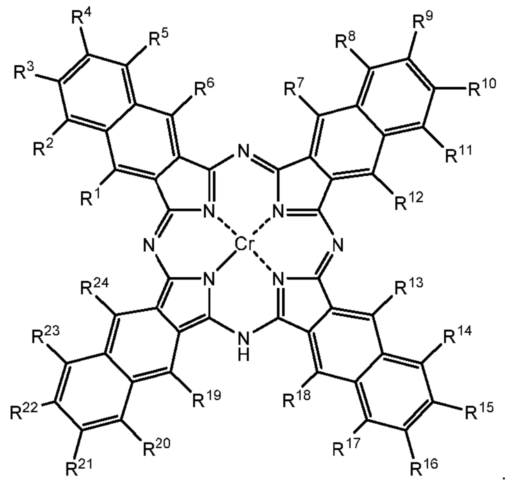

Chemical Formula 1-5:

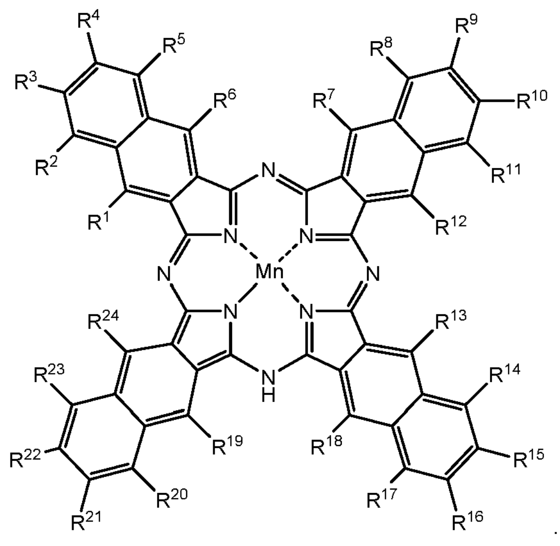

Chemical Formula 1-6:

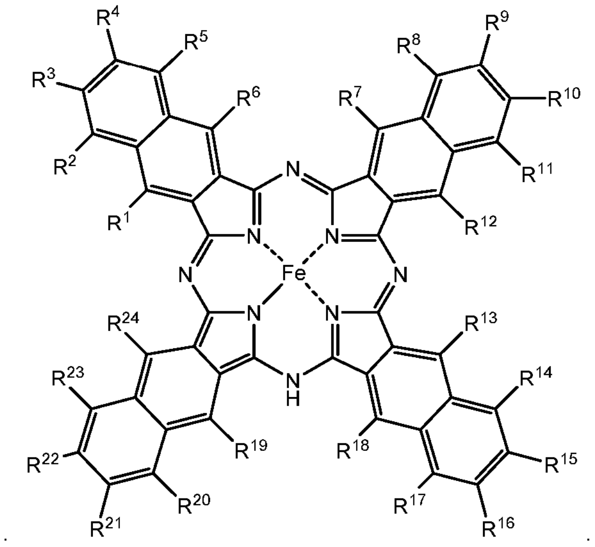

Chemical Formula 1-7:

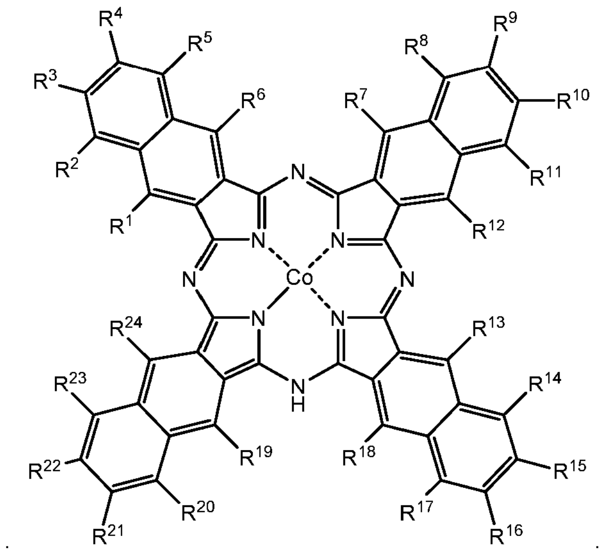

Chemical Formula 1-8:

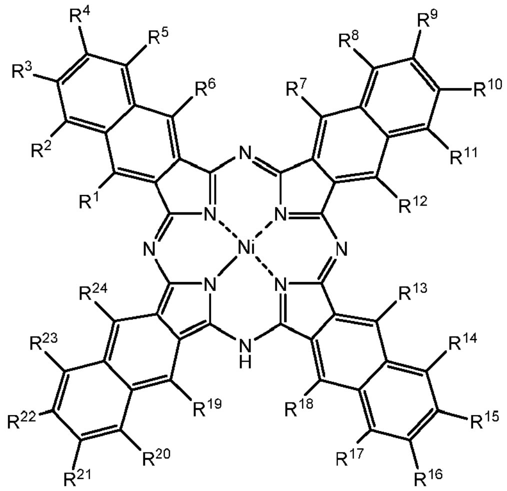

Chemical Formula 1-9:

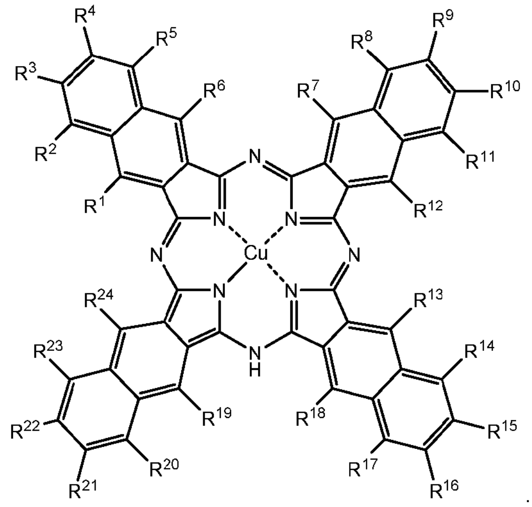

Chemical Formula 1-10:

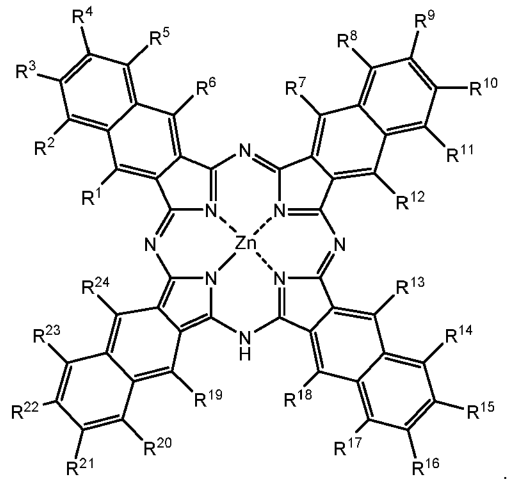

In Chemical Formulas 1-1 to 1-10, $R^1$ to $R^{24}$ are the same as in Chemical Formula 1.

Compared to a rechargeable lithium battery that contains the compound of Chemical Formula 1 in an electrolyte rather than the coating layer, the rechargeable lithium battery which includes a separator including a coating layer containing the compound of Chemical Formula 1 may be further advantageous in that the rechargeable lithium battery can reduce or prevent the occurrence of increased viscosity of the electrolyte due to the addition of the compound.

Meanwhile, in Chemical Formula 1, $R^1$ to $R^{24}$ may each be independently a hydrogen atom, a halogen atom, a substituted or unsubstituted $C_1$-$C_{20}$ alkyl group, a substituted or unsubstituted $C_6$-$C_{20}$ aryl group, or a substituted or unsubstituted $C_6$-$C_{20}$ heterocycloalkyl group.

For example, $R^1$ to $R^{24}$ may all be hydrogen atoms. In this case, the compound represented by Chemical Formula 1 may be naphthalocyanine represented by Chemical Formula 1A below:

Chemical Formula 1A:

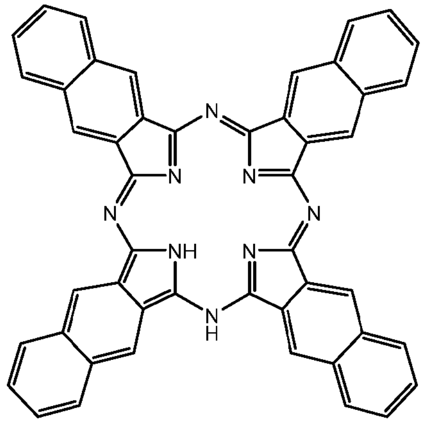

The compound of Chemical Formula 1 may be included at a range of 0.01 wt% to 3 wt% in the coating layer. In this range, the compound of Chemical Formula 1 may more effectively capture transition metal ions, post-transition metal ions, and/or metalloid ions dissociated in the electrolyte to improve the resistance increase rate.

The compound of Chemical Formula 1 is included in the coating layer. The compound of Chemical Formula 1 may be advantageous in securing the air permeability of the separator by being included in the coating layer.

According to one example embodiment, the compound of Chemical Formula 1 may be dispersed in the coating layer or present on the outermost surface of the coating layer.

Porous substrate:

A porous substrate may be or include a substrate that has multiple pores and is commonly used in electrochemical devices. The porous substrate may be or include, but not limited to, a polymer film formed of or including any one polymer such as or including at least one of polyolefins such as polyethylene and polypropylene, polyesters such as polyethylene terephthalate, polybutylene terephthalate and polyethylene naphthalate, polyacetal, polyamide, polyimide, polycarbonate, polyetheretherketone, polyaryletherketone, polyetherimide, polyamideimide, polybenzimidazole, polyethersulfone, polyphenylene oxide, cyclic olefin copolymers, polyphenylene sulfide, glass fiber, Teflon, and polytetrafluoroethylene, or a copolymer or mixture of two or more thereof.

The porous substrate may be or include, for example, a polyolefin-based substrate including a polyolefin, and the polyolefin-based substrate may contribute to improving the safety of the battery due to a desired or improved shut down function. The polyolefin-based substrate may be or include, for example, at least one of a polyethylene single-layer film, a polypropylene single-layer film, a polyethylene/polypropylene double-layer film, a polypropylene/polyethylene/polypropylene triple-layer film, and a polyethylene/polypropylene/polyethylene triple-layer film. In addition, the polyolefin-based resin may include a non-olefin resin, other than olefin resins, or a copolymer of an olefin monomer and a non-olefin monomer.

The porous substrate may have a thickness in a range of 1 μm to 40 μm, for example, 1 μm to 30 μm, 1 μm to 20 μm, or 5 μm to 15 μm.

Coating layer:

The coating layer may further include any binder that does not affect the capturing effect of the compound of Chemical Formula 1 without limitation.

The binder may include one or more of an aqueous based binder and an organic based binder.

According to one example embodiment, the aqueous based binder may include at least one of carboxyalkylcellulose or a salt thereof such as carboxymethylcellulose or a salt thereof; one or more copolymers of (meth)acrylic acid, (meth)acrylic acid ester, (meth)acrylonitrile, and (meth)acrylamide; and one or more of diene-based rubbers. For example,

the aqueous based binder may include at least one of carboxy methylcellulose or a salt thereof, polyvinyl alcohol, polyacrylic acid, styrene butadiene rubber, and carboxy modified styrene butadiene rubber.

According to one example embodiment, the organic based binder may include one or more of polyvinylidene fluoride and polyvinylidene fluoride-hexafluoropropylene.

One or more of the aqueous based binder and the organic based binder may have a weight average molecular weight in a range of 10,000 g/mol to 500,000 g/mol, for example, 10,000 g/mol, 50,000 g/mol, 100,000 g/mol, 150,000 g/mol, 200,000 g/mol, 250,000, 300,000 g/mol, 350,000 g/mol, 400,000 g/mol, 450,000 g/mol, 500,000 g/mol, 70,000 g/mol to 75,000 g/mol. In this range, it may be possible to exhibit a capturing effect by the compound of Chemical Formula 1. Herein, "weight average molecular weight" may be obtained as a polystyrene conversion value by gel permeation chromatography.

The compound of Chemical Formula 1 may be included at a range of 0.01 wt% to 3 wt% in the coating layer. In this range, the compound of Chemical Formula 1 may effectively capture transition metal ions, post-transition metal ions, and/or metalloid ions, which are dissociated in an electrolyte, thereby obtaining an effect of improving a DC resistance increase rate. For example, the compound of Chemical Formula 1 may be included at a range of 0.01, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95, 3 wt%, 1 wt% to 3 wt% or 1 wt% to 2 wt% in the coating layer.

The coating layer may further include one or more of an organic filler and an inorganic filler, which are known to those of ordinary skill in the art. The organic filler and the inorganic filler may each be a common type known to those of ordinary skill in the art.

The coating layer may have a thickness in a range of 0.01 $\mu$m to 20 $\mu$m, and 1 $\mu$m to 5 $\mu$m within this range.

The separator may be formed by applying a composition for forming a coating layer on one surface, or on both surfaces, of a porous substrate. The composition for forming a coating layer may include the compound of Chemical Formula 1; and one or more of the aqueous based binder and the organic based binder.

FIG. 6 is a cross-sectional view showing a separator for a rechargeable lithium battery according to one example embodiment. Referring to FIG. 6, the separator for a rechargeable lithium battery includes a porous substrate 1 and a coating layer 2 located on both surfaces of the porous substrate 1. The coating layer 2 may include the compound of Chemical Formula 1(not shown).

Rechargeable lithium battery

According to one example embodiment, the rechargeable lithium battery includes the separator for a rechargeable lithium battery, a positive electrode, and a negative electrode. The separator for rechargeable lithium battery refers to the description described above. The separator for rechargeable lithium battery may be positioned between the positive electrode and the negative electrode.

A positive electrode for a rechargeable lithium battery may include a current collector, and a positive electrode active material layer on the current collector. The positive electrode active material layer may include a positive electrode active material, and may further include a binder and/or a conductive material. For example, the positive electrode may further include an additive that can constitute a sacrificial positive electrode.

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium nickel cobalt manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_{1-b-c}Mn_dX_cO_{2-\alpha}D_\alpha$ ($0.90 \le a \le 1.8$, $0 \le b \le 0.5$, $0 \le c \le 0.5$, and $0 < \alpha < 2$); $Li_aNi_bCo_cL^1{}_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$); $Li_aMn_{1-b}G_bO_2$ ($0.90 \le a \le 1.8$ and $0.001 \le b \le 0.1$); $Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); or $Li_aFePO_4$ ($0.90 \le a \le 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode

active material having a nickel content that is greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of 90 wt% to 99.5 wt% based on 100 wt% of the positive electrode active material layer. Amounts of the binder and the conductive material may be in a range of 0.5 wt% to 5 wt%, respectively, based on 100 wt% of the positive electrode active material layer.

The binder attaches the positive electrode active material particles to each other, and attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause adverse chemical change (e.g., does not cause an undesirable chemical change in the rechargeable lithium battery), and that conducts electrons can be used in the battery. Examples of the conductive material may include a carbon-based material such as or including at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in the form of a metal powder or a metal fiber; a conductive polymer such as a polyphenylene derivative; or a mixture thereof.

Al may be used as the current collector, but is not limited thereto.

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiOx$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may also attach the negative electrode active material to the current collector. The binder may include a non-aqueous binder, an aqueous

binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., that does not cause an undesirable chemical change in the rechargeable lithium battery), and that conducts electrons can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed, and the cyclic carbonate and the chain carbonate may be mixed in a volume ratio in a range of 1:1 to 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

According to one example embodiment, the electrolyte solution may include at least one of ethylene carbonate (EC), ethyl methyl carbonate (EMC), and dimethyl carbonate (DMC) as the non-aqueous organic solvent, and may include $LiPF_6$ as the lithium salt.

According to one example embodiment, the ethylene carbonate (EC) may be included in an amount in a range of 1 vol% to 30 vol%, the ethyl methyl carbonate (EMC) may be included in an amount in a range of 20 vol% to 60 vol%, and the dimethyl carbonate (DMC) may be included in an amount in a range of 20 vol% to 60 vol%, based on the total volume 100

vol% of the non-aqueous organic solvent in the electrolyte solution.

According to one example embodiment, the concentration of the lithium salt in the electrolyte may be in a range of 0.1 M to 2.0 M.

According to one example embodiment, the electrolyte may include at least one of the chemical formulae 1-1 to 1-10 discussed above.

The rechargeable lithium battery may be classified into cylindrical, prismatic, pouch, or coin-type batteries, and the like depending on the shape thereof. FIG. 1 to FIG. 4 are schematic views illustrating a rechargeable lithium battery according to an example embodiment. FIG. 1 shows a cylindrical battery, FIG. 2 shows a prismatic battery, and FIG. 3 and FIG. 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 1. In FIG. 2, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 3 and FIG. 4, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are merely examples of the present disclosure, and the present disclosure is not limited thereto.

**Example 1**

A composition for a coating layer including polyvinylidene fluoride (PVDF) as a binder and the compound of Chemical Formula 1A was prepared.

Both surfaces of a polyethylene-based film (thickness: 18 μm, SK) as a porous substrate were coated with the composition for a coating layer to a thickness of 1 μm by a die coating method, and dried in an oven at 80 °C for 16 hours to form coating layers, thereby manufacturing a separator for a rechargeable lithium battery formed of a first coating layer (thickness: 1 μm) including the compound of Chemical Formula 1A and a PVDF binder/porous substrate (thickness: 18 μm) / a second coating layer (thickness: 1 μm) including the compound of Chemical Formula 1A and a PVDF binder. The compound of Chemical Formula 1A was included at 1 wt% in the first coating layer, and the compound of Chemical Formula 1A was included at 1 wt% in the second coating layer.

**Example 2**

A separator was manufactured in the same manner as in Example 1, with a difference that the content of the compound of Chemical Formula 1A in a first coating layer was changed to 1.5 wt%, and the content of the compound of Chemical Formula 1A in a second coating layer was changed to 1.5 wt%.

**Comparative Example 1**

A separator was manufactured in the same manner as in Example 1, with a difference that the content of the compound of Chemical Formula 1A in a first coating layer was changed to 0 wt%, and the content of the compound of Chemical Formula 1A in a second coating layer was changed to 0 wt%.

**Manufacture of rechargeable lithium battery**

(1) Manufacture of positive electrode

A positive electrode active material layer slurry was prepared by mixing 97.7 wt% of a positive electrode active material, 1.3 wt% of a polyvinylidene fluoride, and 1.0 wt% of a carbon nanotube conductive material, applied to an aluminum foil current collector, dried and then rolled, thereby manufacturing a positive electrode.

(2) Manufacture of negative electrode

A negative electrode active material slurry was prepared by mixing 97.6 wt% of a graphite negative electrode

active material, 1.6 wt% of carboxymethyl cellulose, and 0.8 wt% of styrene butadiene rubber in a water solvent. A copper foil current collector was coated with the negative electrode active material slurry, dried and then rolled, thereby manufacturing a negative electrode.

(3) Preparation of electrolyte solution

An electrolyte was prepared by mixing $LiPF_6$ lithium salt at a concentration of 1.15M in an organic solvent containing ethylene carbonate (EC), ethyl methyl carbonate (EMC), and dimethyl carbonate (DMC) in a volume ratio of 20:40:40, and further dissolving the transition metal salts of Table 1 below.

(4) Manufacture of rechargeable lithium battery

An electrode assembly was prepared by assembling the positive and negative electrodes prepared above and each of the separators of Examples and Comparative Example, and put into a prismatic case. Then, the electrolyte was put into the case, thereby manufacturing a battery.

Evaluation Example 1: DC internal resistance increase rate (units: %) according to the number of high-temperature storage days of rechargeable lithium battery

For the rechargeable lithium batteries of Examples 1 and 2, and Comparative Example 1, the high-temperature storage characteristics were evaluated using the following method. The results are shown in Table 1 below and in FIG. 5.

After measuring the initial DC internal resistance (DC-IR) as the value of $\triangle V/\triangle I$ (change in voltage/change in current), the maximum energy state in the battery was made into a fully charged state (SOC (state of charge) 100%), stored at a high temperature (60 °C) for 90 days, a DC internal resistance was measured, and then a DC-IR increase rate (%) was calculated by Equation 1 below:

$$\text{DC-IR increase rate [\%]} = (\text{DC-IR after 90 days of high-temperature storage/initial DC-IR}) \times 100 \qquad \text{Equation 1:}$$

Evaluation Example 2: Amount of metal precipitation (units: ppm) on negative electrode surface after high-temperature storage of rechargeable lithium battery

For the rechargeable lithium batteries of Examples 1 and 2, and Comparative Example 1, after high-temperature storage for 90 days by the method of Evaluation Example 1, the batteries were dissembled and the amounts of transition metals, post-transition metals, metalloids, and/or their oxides deposited on the negative electrode surface were measured. The results are listed in Table 1 below.

Herein, the amounts of transition metals, post-transition metals, metalloids, and/or their oxides deposited on the negative electrode surface were measured using an inductively coupled plasma mass spectrometer (ICP, manufacturer: Horiba Corp., device name: Ultima2) after dissembling the cell under a condition of 100% SOC.

Table 1:

| | Example 1 | | Example 2 | | Comparative Example 1 | |
|---|---|---|---|---|---|---|
| Transition metal salt in electrolyte solution | DC internal resistance increase rate | Amount of metal precipitation | DC internal increase rate | Amount of metal precipitation | DC internal current increase rate | Amount of metal precipitation |
| $Sc(SO_3CF_3)_3$ 0.1 wt% | 109.4 | 12 | 106.8 | 11 | 115.8 | 701 |
| $Ti(OCH(CH_3)_2$:$_4$ 0.2 wt% | 114.4 | 13 | 110.8 | 11 | 120.7 | 892 |
| $VO(SO_4)$ 0.2 wt% | 111.2 | 6 | 110.4 | 5 | 123.4 | 660 |
| $Cr_2(SO_4)_3$ 0.1 wt% | 104.7 | 10 | 102.1 | 9 | 119.5 | 790 |
| $Mn(SO_4)_2$ 0.2 wt% | 109.5 | 16 | 107.8 | 13 | 120.1 | 998 |
| $Fe(ClO_4)_3$ 0.2 wt% | 113.3 | 21 | 112.1 | 19 | 121.4 | 598 |
| $Co(ClO_4)_2$ 0.2 wt% | 107.7 | 31 | 105.7 | 27 | 118.9 | 786 |

(continued)

| | Example 1 | | Example 2 | | Comparative Example 1 | |
|---|---|---|---|---|---|---|
| Transition metal salt in electrolyte solution | DC internal resistance increase rate | Amount of metal precipitation | DC internal increase rate | Amount of metal precipitation | DC internal current increase rate | Amount of metal precipitation |
| $Ni(SO_4)_2$ 0.2 wt% | 106.4 | 21 | 104.4 | 18 | 116.6 | 745 |
| $Cu(OSO_2CF_3)_2$ 0.2 wt% | 110.0 | 22 | 104.2 | 18 | 117.7 | 855 |
| $Zn(COOCF_3)_2$ 0.2 wt% | 108.9 | 27 | 107.1 | 22 | 119.7 | 918 |

As shown in Table 1 above, the separators for a rechargeable lithium battery of Examples have an effect of capturing transition metal ions, post-transition metal ions, and/or metalloid ions that are eluted into the electrolyte. Therefore, it can be concluded that the separators of Examples can improve a resistance increase rate when the rechargeable lithium batteries are charged at high voltage or stored at high temperatures.

However, the separator of Comparative Example has a higher resistance increase rate and a higher amount of metal precipitation on the negative electrode surface after the rechargeable lithium battery is stored at high temperatures, compared to those of Examples.

## Claims

**1.** A separator (30) for a rechargeable lithium battery (100), the separator (30) comprising:

a porous substrate (1); and
a coating layer (2) located on at least one surface of the porous substrate (1),
wherein the coating layer (2) comprises a compound represented by Chemical Formula 1:

Chemical Formula 1:

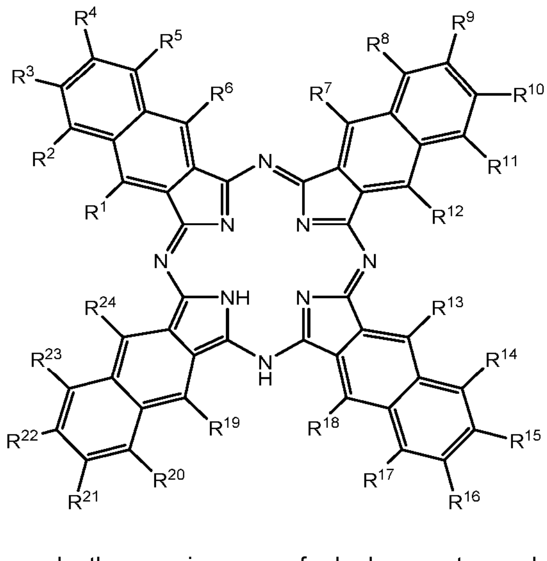

;

wherein $R^1$ to $R^{24}$ each independently comprises one of a hydrogen atom, a halogen atom, a substituted or unsubstituted $C_1$-$C_{20}$ alkyl group, a substituted or unsubstituted $C_6$-$C_{20}$ aryl group, and a substituted or unsubstituted $C_6$-$C_{20}$ heterocycloalkyl group,
wherein the term "substituted" refers to a substitution of at least one hydrogen atom with a substituent selected from the group consisting of a halogen atom, a hydroxy group, a $C_1$ to $C_{20}$ alkoxy group, a nitro group, a cyano group, an amine group, an imino group, an azido group, an amidino group, a hydrazino group, a hydrazono group,

a carbonyl group, a carbamyl group, a thiol group, an ester group, an ether group, a carboxyl group or a salt thereof, a sulfonic acid group or a salt thereof, a phosphoric acid or a salt thereof, a $C_1$ to $C_{20}$ alkyl group, a $C_2$ to $C_{20}$ alkenyl group, a $C_2$ to $C_{20}$ alkynyl group, a $C_6$ to $C_{30}$ aryl group, a $C_3$ to $C_{20}$ cycloalkyl group, a $C_3$ to $C_{20}$ cycloalkenyl group, a $C_3$ to $C_{20}$ cycloalkynyl group, a $C_2$ to $C_{20}$ heterocycloalkyl group, a $C_2$ to $C_{20}$ heterocycloalkenyl group, and a $C_2$ to $C_{20}$ heterocycloalkynyl group.

**2.** The separator of claim 1, wherein, in Chemical Formula 1, $R^1$ to $R^{24}$ are all hydrogen atoms.

**3.** The separator of claim 1 or 2, wherein the compound of Chemical Formula 1 is included at a range of 0.01 wt% to 3 wt% in the coating layer (2).

**4.** The separator of claim 3, wherein the compound of Chemical Formula 1 is included at a range of 1.0 wt% to 3.0 wt% in the coating layer (2).

**5.** The separator of any one of the preceding claims, wherein the coating layer (2) has a thickness in the range of 1 μm to 5 μm.

**6.** The separator of any one of the preceding claims, wherein the coating layer (2) further comprises a binder.

**7.** The separator of claim 6, wherein the binder is at least one compound selected from the group consisting of:

carboxyalkylcellulose or a salt thereof;
copolymers of (meth)acrylic acid, (meth)acrylic acid ester, (meth)acrylonitrile, and (meth)acrylamide; diene-based rubbers; and
polyvinylidene fluoride and polyvinylidene fluoride-hexafluoropropylene.

**8.** The separator of any one of the preceding claims, wherein the porous substrate (1) is a polyolefin-based substrate including a polyolefin.

**9.** The separator of claim 8, wherein the porous substrate (1) is a polyethylene-based film.

**10.** The separator of claim 8 or 9, wherein the porous substrate (1) has a thickness in a range of 1 μm to 40 μm.

**11.** A rechargeable lithium battery (100), comprising:

a positive electrode (10);
a negative electrode (20);
an electrolyte solution; and
a separator (30) as defined in claim 1 and located between the positive electrode (10) and the negative electrode (20).

**12.** The rechargeable lithium battery of claim 11, wherein the positive electrode (10) comprises a positive electrode active material containing at least one of a lithium nickel-based oxide, a lithium cobalt-based oxide, a lithium manganese-based oxide, a lithium-nickel-cobalt-manganese-based oxide, a lithium iron phosphate-based compound, and a cobalt-free nickel-manganese-based oxide.

**13.** The rechargeable lithium battery of claim 11 or 12, wherein the electrolyte solution comprises at least one of ethylene carbonate (EC), ethyl methyl carbonate (EMC), and dimethyl carbonate (DMC) as a non-aqueous organic solvent.

**14.** The rechargeable lithium battery of claim 13, wherein the electrolyte solution comprises 1 vol% to 30 vol% of the ethylene carbonate (EC), 20 vol% to 60 vol% of the ethyl methyl carbonate (EMC), and 20 vol% to 60 vol% of the dimethyl carbonate (DMC) with respect to the total volume 100 vol% of the non-aqueous organic solvent.

**15.** The rechargeable lithium battery of any one of claims 11 to 14, wherein the electrolyte solution comprises one or more of complexes represented by any one of Chemical Formulas 1-1 to 1-10:

Chemical Formula 1-1:

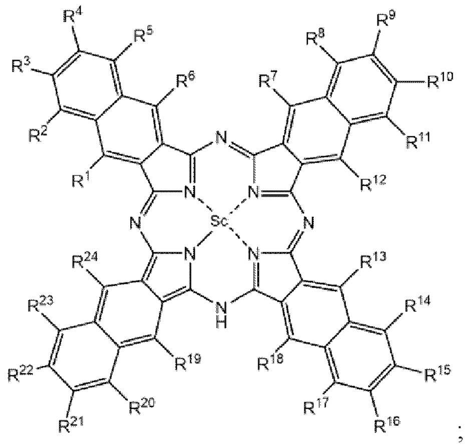

;

Chemical Formula 1-2:

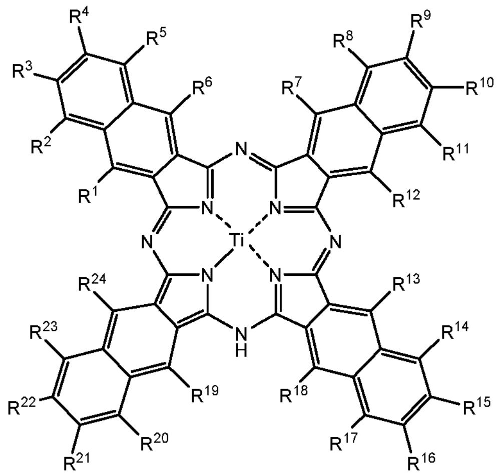

;

Chemical Formula 1-3:

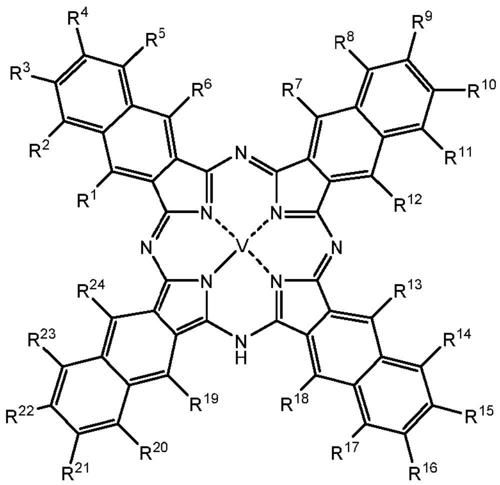

;

Chemical Formula 1-4:

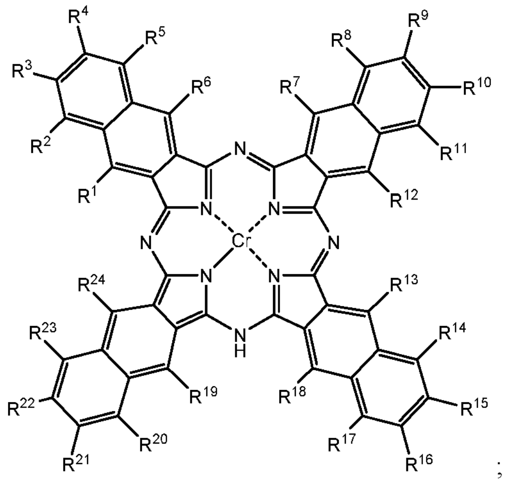

;

Chemical Formula 1-5:

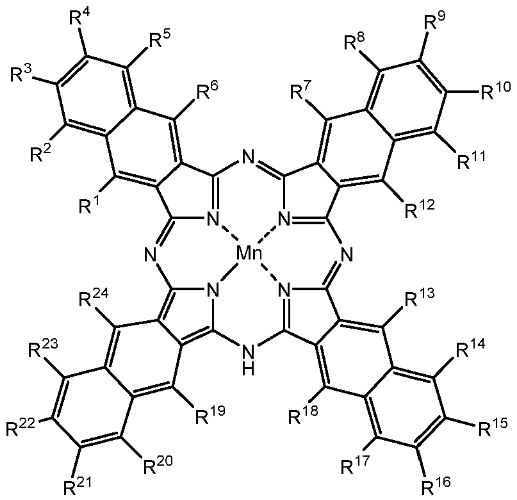

;

Chemical Formula 1-6:

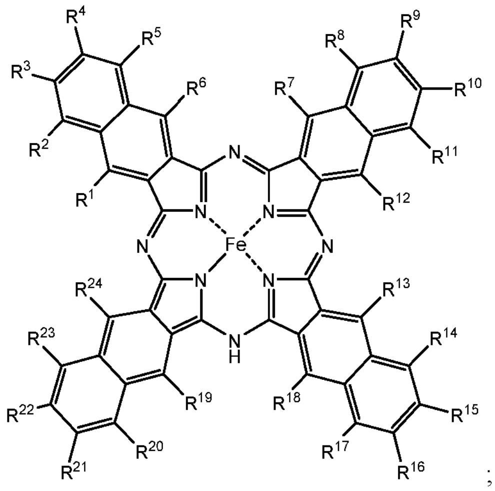

;

Chemical Formula 1-7:

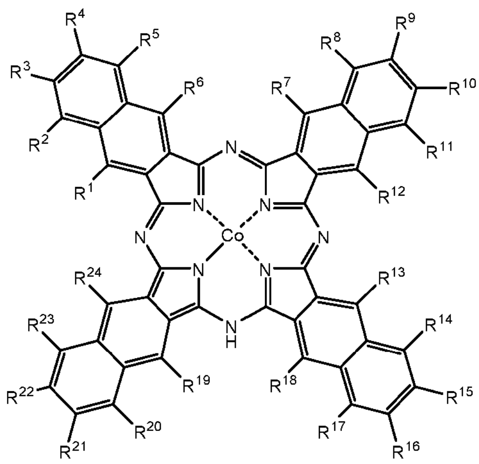

;

Chemical Formula 1-8:

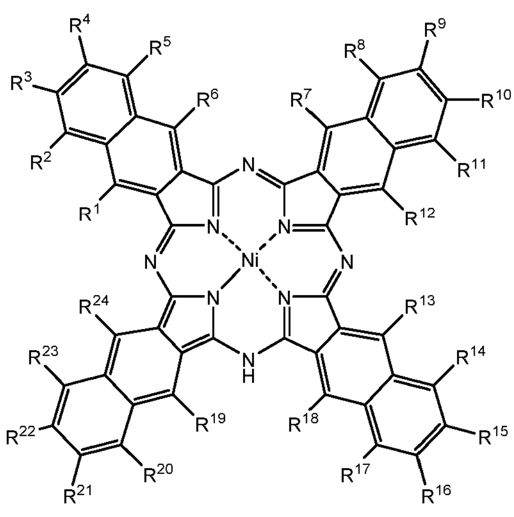

;

Chemical Formula 1-9:

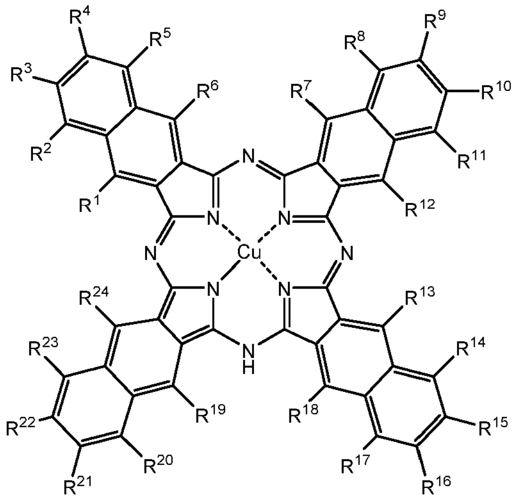

;

and

Chemical Formula 1-10:

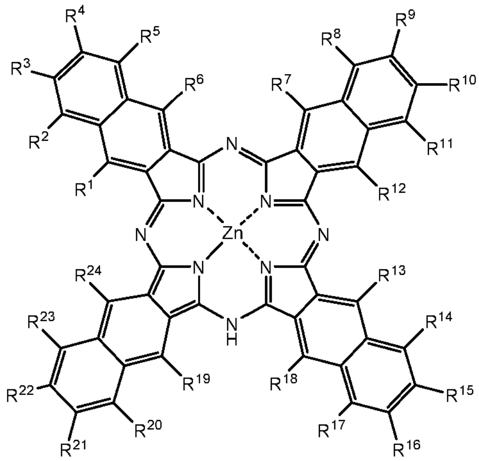

;

in Chemical Formulas 1-1 to 1-10, $R^1$ to $R^{24}$ is same as in Chemical Formula 1.

**FIG. 1**

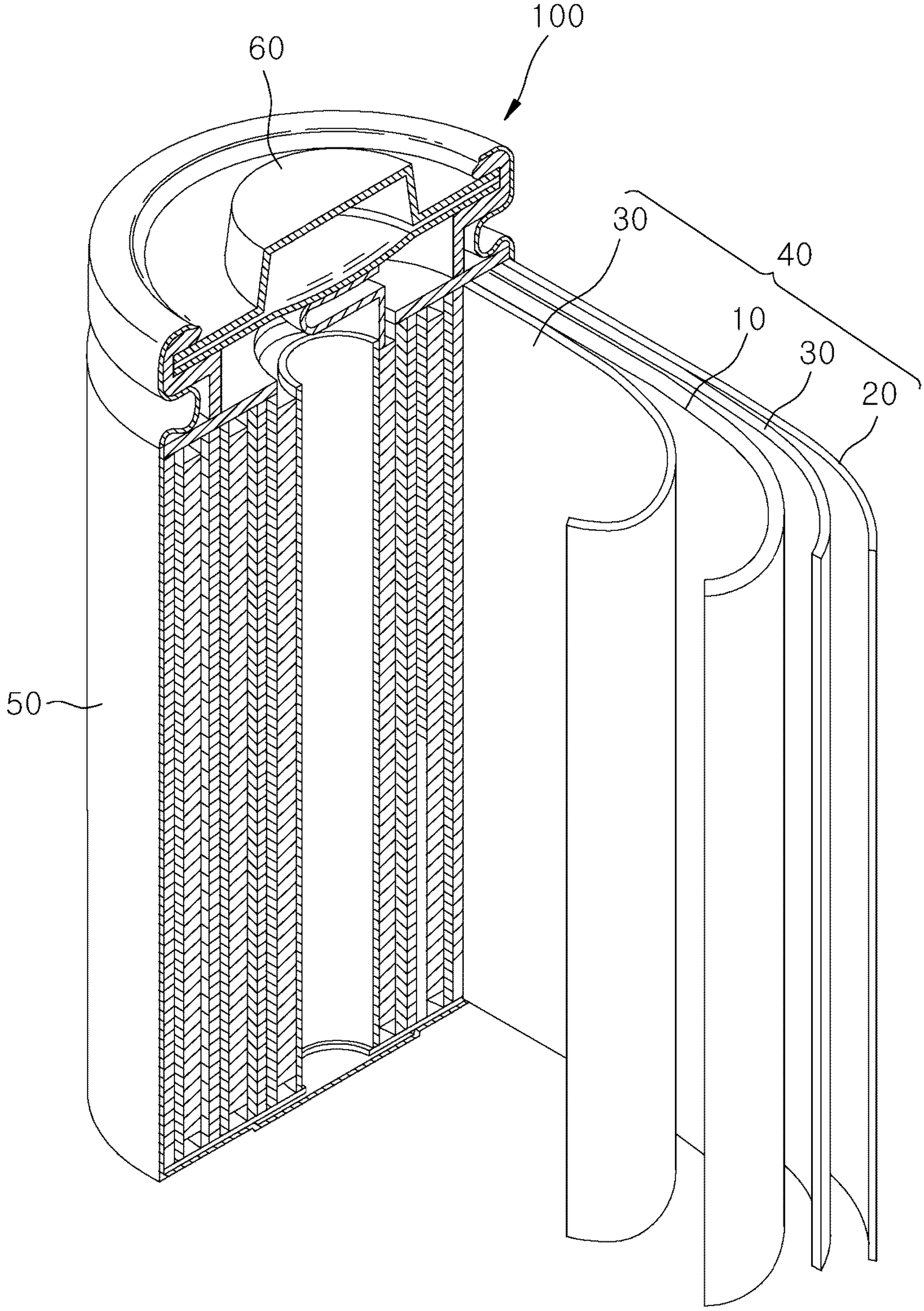

FIG. 2

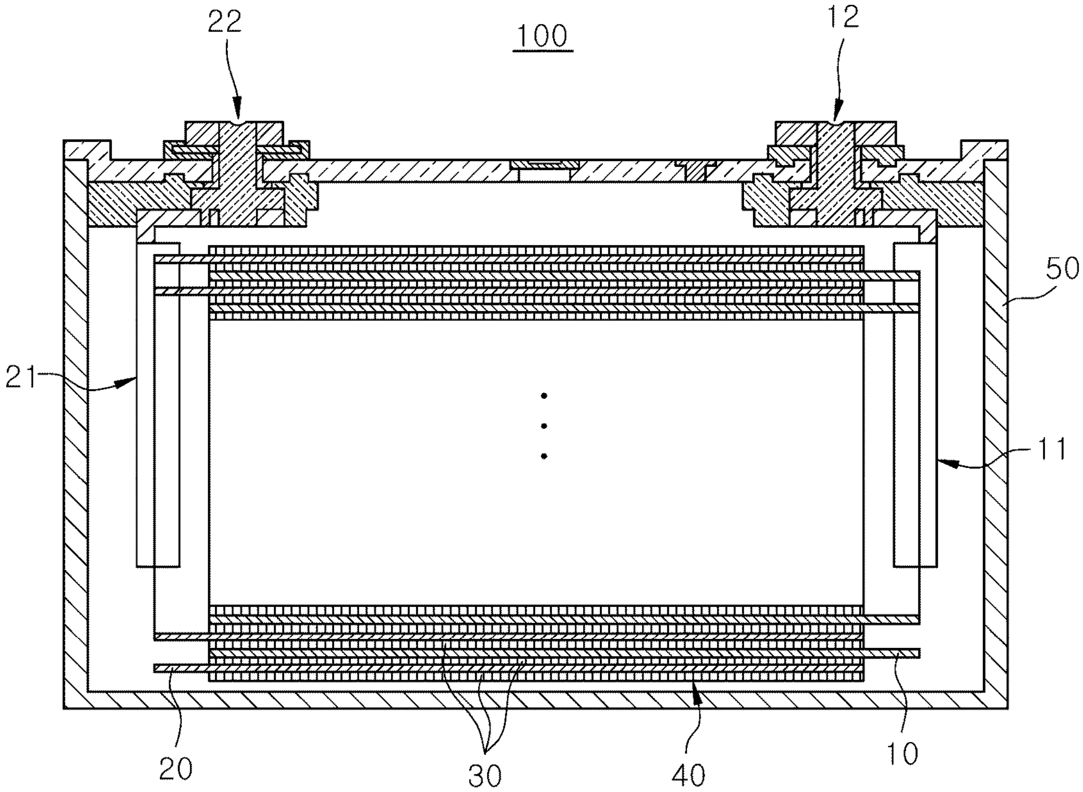

**FIG. 3**

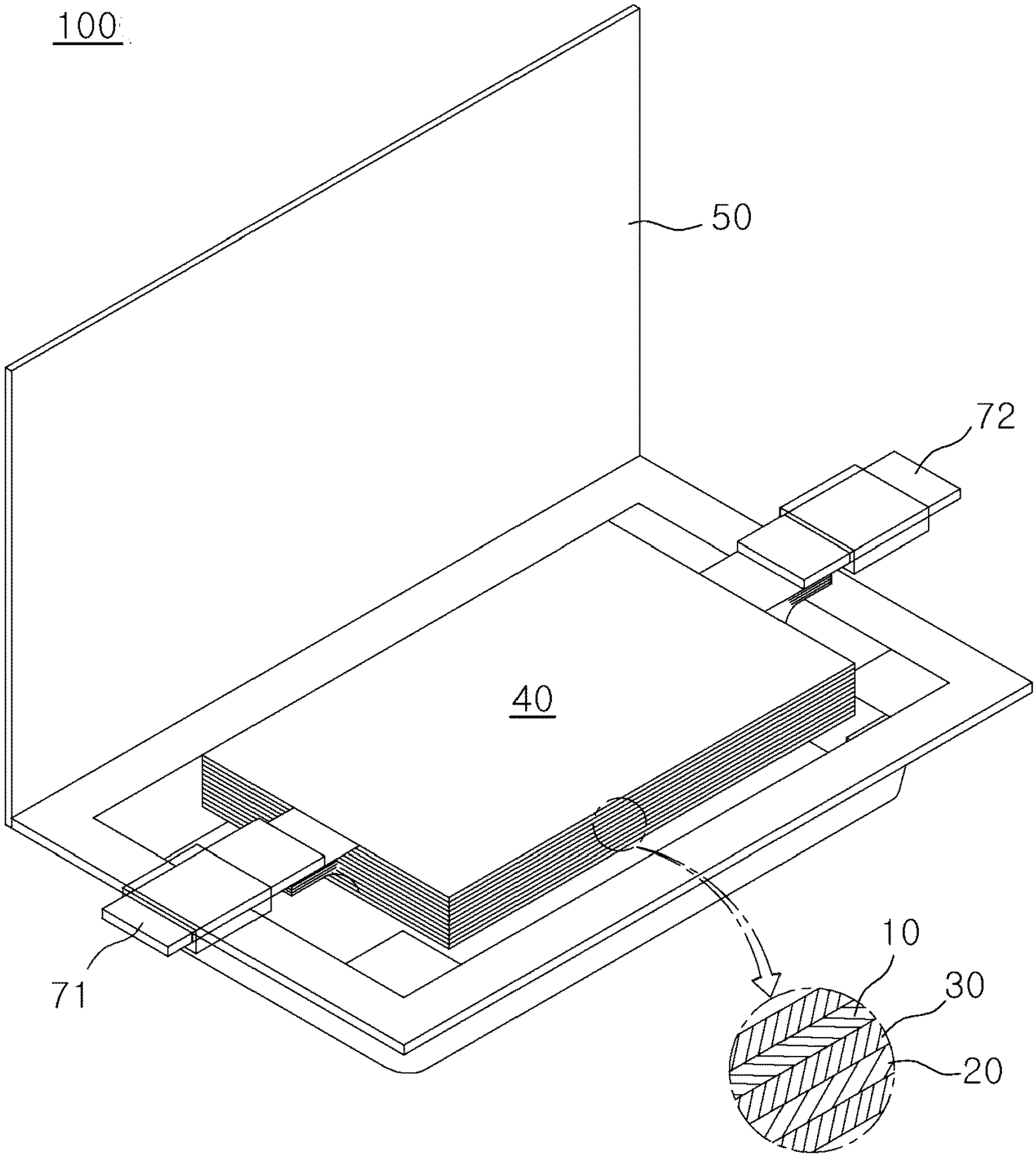

FIG. 4

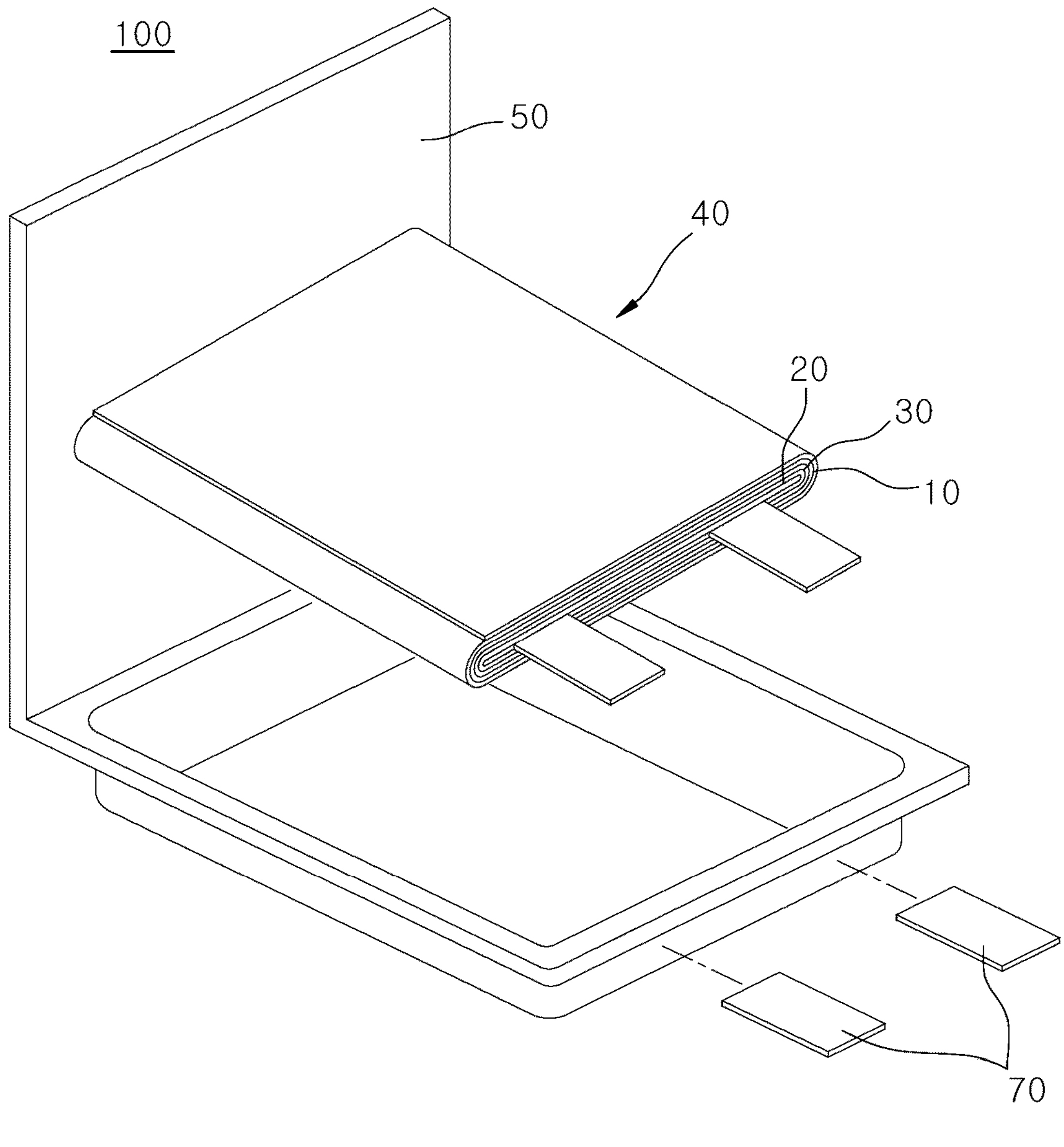

FIG. 5

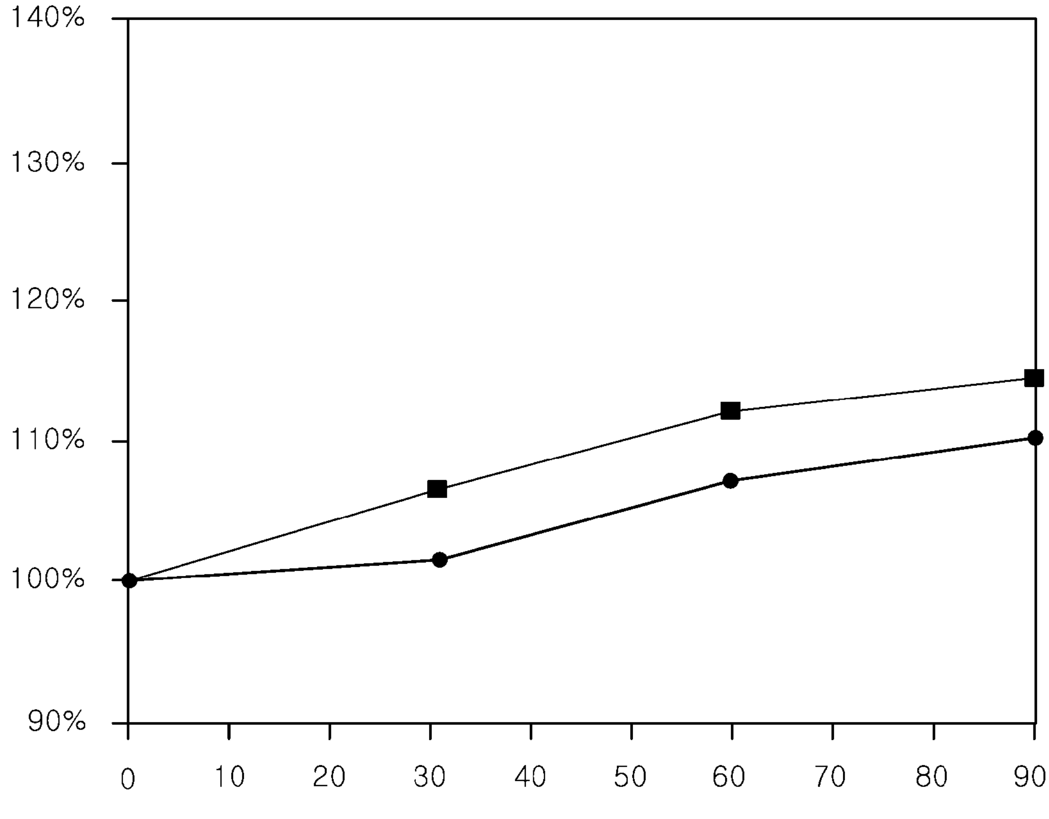

FIG. 6

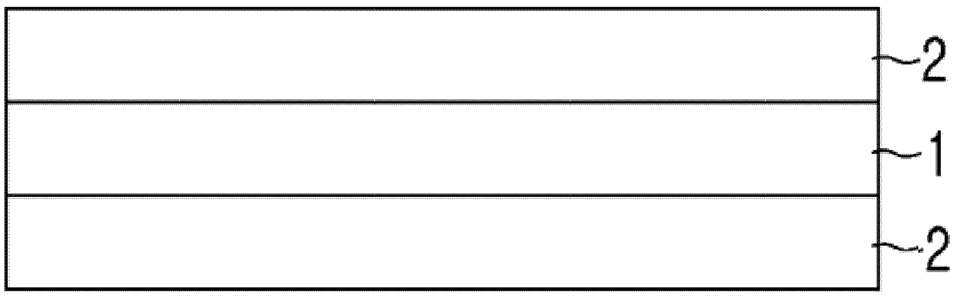

Europäisches Patentamt
European Patent Office
Office européen des brevets

# EUROPEAN SEARCH REPORT

Application Number
EP 25 20 1886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2009 283411 A (TOYOTA MOTOR CORP) 3 December 2009 (2009-12-03) * the whole document * * | 1-15 | INV. H01M10/0564 H01M10/0566 H01M50/449 C08G73/02 H01M50/411 |
| X | CN 115 295 963 A (UNIV HUAZHONG SCIENCE TECH) 4 November 2022 (2022-11-04) * paragraph [0046] * | 1-15 | |
| X | CN 110 890 504 A (UNIV HUAZHONG SCIENCE TECH) 17 March 2020 (2020-03-17) * pages 1-3 * | 1-15 | |
| A | US 2021/013536 A1 (GOLDEN JESSICA H [US] ET AL) 14 January 2021 (2021-01-14) * paragraphs [0195], [0235] * * pages 1-3 * | 1-15 | |
| | | | TECHNICAL FIELDS SEARCHED (IPC) |
| | | | H01M C08G |

The present search report has been drawn up for all claims

| Place of search | Date of completion of the search | Examiner |
|---|---|---|
| The Hague | 4 February 2026 | Standaert, Frans |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 20 1886

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2026

| Patent document cited in search report | Publication date | Patent family member(s) | Publication date |
|---|---|---|---|
| JP 2009283411 A | 03-12-2009 | JP 5320819 B2 | 23-10-2013 |
| | | JP 2009283411 A | 03-12-2009 |
| CN 115295963 A | 04-11-2022 | NONE | |
| CN 110890504 A | 17-03-2020 | NONE | |
| US 2021013536 A1 | 14-01-2021 | NONE | |

EPO FORM P0459

For more details about this annex : see Official Journal of the European Patent Office, No. 12/82